# EUROPÄISCHE PATENTSCHRIFT

(11) **EP 0 718 528 B1**
(45) Veröffentlichungstag und Bekanntmachung des Hinweises auf die Patenterteilung: **27.01.1999**
(21) Anmeldenummer: 95119090.9
(22) Anmeldetag: 05.12.1995
(51) Int. Cl.: F16H 59/02, G05G 25/04

(54) **Schlitzabdeckung für ein geschlitztes Gehäuse einer Aussenschaltung eines Kraftfahrzeuges mit automatischem Getriebe**
Aperture closure member for the slotted housing of an automatic transmission shift lever console
Elément de couverture pour la fente dans un boîtier de commande d'une transmission automatique

(30) Priorität: 22.12.1994 DE 4445925
(43) Veröffentlichungstag der Anmeldung: 26.06.1996
(73) Patentinhaber: LEMFÖRDER METALLWAREN AG., 49441 Lemförde (DE)
(72) Erfinder: Ersoy, Metin, Dr.-Ing., D-65396 Walluf (DE); Fricke, Cord, Dipl.-Ing., D-49086 Osnabrück (DE); Plietker, Klaus, Dipl.-Ing., D-48612 Greven (DE); Schmidt, Karl-Heins, Dipl.-Ing., D-32547 Bad Oeynhausen (DE)

(56) Entgegenhaltungen:
- EP-A- 0 271 819
- DE-U- 7 117 022
- FR-A- 2 635 204
- US-A- 4 565 151
- US-A- 4 964 359

## Beschreibung

Die Erfindung bezieht sich auf eine Schlitzabdeckung für das geschlitzte Gehäuse einer Außenschaltung eines Kraftfahrzeuges mit automatischem Getriebe nach dem Oberbegriff des Patentanspruches 1.

Bekannt ist eine solche Schlitzabdeckung aus der US 4,565,151. Die Jalousie ist darin aus einem bandförmigen Grundkörper gebildet. Die Endbereiche dieser Jalousie sind eher weich ausgeführt. Die unteren freien Enden der Jalousie verlaufen außerhalb der sie führenden Aufnahmen im Gehäuse der Schaltvorrichtung ohne Führung, sind also frei beweglich. Zwischen den Führungen und der Jalousie ist ferner ein Spielraum vorgesehen, der eine leichtgängige Bewegbarkeit der Jalousie gewährleisten soll. Somit kann es bei einer Lösung nach der US 4,565,151 zu klappernden Geräuschen in der Schaltvorrichtung kommen, was störend und komfortmindernd wirkt.

Ferner ist aus DE-GM 71 17 022 eine Schlitzabdeckung bekannt, bei der die Jalousie aus einem an der sichtbaren Oberseite querverlaufende Kerben aufweisenden Kunststoffstreifen, die aneinandergereihte Glieder bilden, besteht.

Die Anzeige der von einem Fahrzeuglenker gewählten Schaltstellung ist wegen ihrer Bedeutung bereits Inhalt zahlreicher Publikationen. Bei Fahrzeugen mit einem automatisch wirksamen Schaltgetriebe wird der Schaltstock für unterschiedliche Schaltstellungen vielfach in einem Schlitz auf einer im wesentlichen geraden Bahn in einem Gehäuse bewegt. Dieser Schlitz soll einerseits gegen eindringenden Schmutz geschützt werden, aber andererseits eine gewollte optische Gestaltung, insbesondere bei teuren Fahrzeugen, nicht beeinträchtigen. Bekannt sind Balgdichtungen aus flexiblem Kunststoff, Leder oder dergleichen, wodurch aber die einwandfreie Schaltstellungsanzeige erschwert wird, oder Abdeckelemente, die von dem Schaltstock mitgenommen werden. Der oft lange Schaltbereich zwischen den Endpositionen des Schaltstockes erfordert mehrere Abdeckelemente, und in Verbindung mit Anzeigeelementen sind in praktischen Ausführungsformen vielteilige Ausbildungen bekannt. Viele Einzelteile erhöhen die bei teuren Fahrzeugen gehobener Ausstattung besonders unerwünschte Gefahr von Klappergeräuschen.
Aus der GB-2 017 838 A ist eine einteilige Abdeckung für den Bewegungsschlitz eines schwenkbaren Maschinenhebels bekannt, die zusammen mit dem Maschinenhebel um eine zentrale Achse schwenkbar ist. Eine solche Abdeckung ist in Kraftfahrzeugen nicht unterzubringen.

Aufgabe der Erfindung ist es, eine hohen Komfortansprüchen entsprechende, optisch frei gestaltbare Schlitzabdeckung für ein geschlitztes Gehäuse einer Außenschaltung eines Kraftfahrzeuges mit automatischem Getriebe zu schaffen, die nur wenig Einzelteile aufweist und eine gute Schaltstellungsanzeige ermöglicht.

Diese Aufgabe löst die Erfindung durch Ausbildungsmerkmale nach dem Kennzeichen des Patentanspruches 1.

Eine solche Schlitzabdeckung ist kostengünstig herstellbar und besteht vorzugsweise aus nur einem Bauteil, welches von dem Schaltstock durchgriffen wird, und an dem ein Anzeigeelement unmittelbar befestigt ist, welches auf Schaltstellungssymbole hinweist, die sich an der Oberseite des Gehäuses befinden. Im Endbereich weist die Jalousie eine Form auf, die von der Form der Führung für die Jalousie abweicht, so daß bei der Bewegung der Jalousie in der Führung eine Materialspannung in der Jalousie hervorgerufen wird, durch die die Jalousie in der Führung leicht verspannt wird. Dadurch werden einerseits Klappergeräusche ausgeschlossen und wird andererseits die Leichtgängigkeit der Bewegung kaum beeinträchtigt. Von der Form der Führung abweichende Formen der Jalousie sind an beiden Enden vorgesehen.

Die erfindungsgemäße Schlitzabdeckung wird in ein in Längsrichtung in einer Mittelebene des Schlitzes geteiltes und bei der Montage durch Schnappelemente aus elastischem Kunststoff zusammengefügtes Gehäuse eingesetzt. Dies ermöglicht die Montage des Gehäuses mit der Schlitzabdeckung ohne Werkzeuge und reduziert die Herstellungskosten erheblich.

In der Zeichnung ist ein Ausführungsbeispiel der Erfindung dargestellt. Es zeigen:

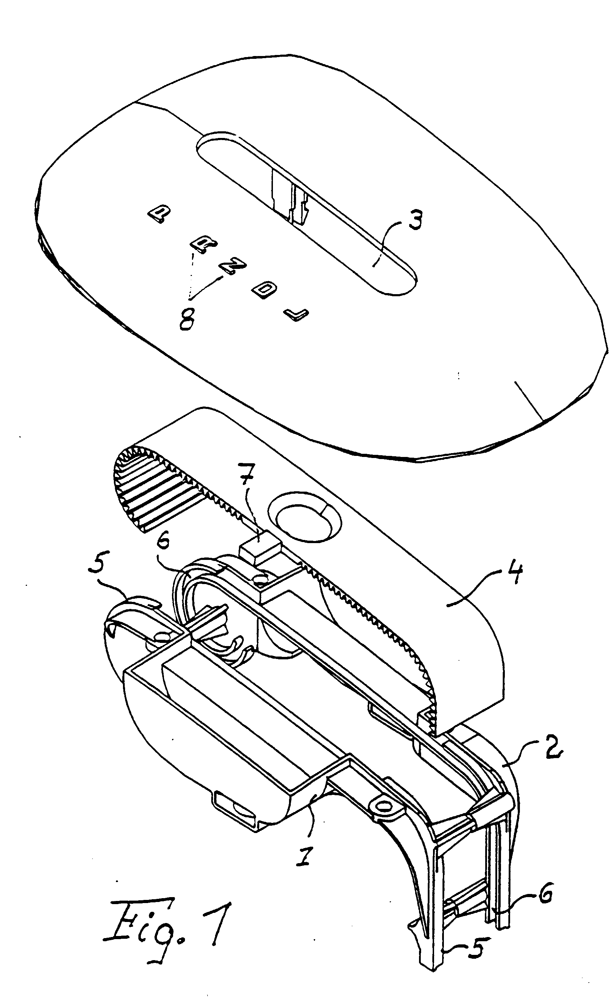

- Figur 1: in einer Explosionszeichnung Gehäusedeckel, Schlitzabdeckung und Gehäuseführung,

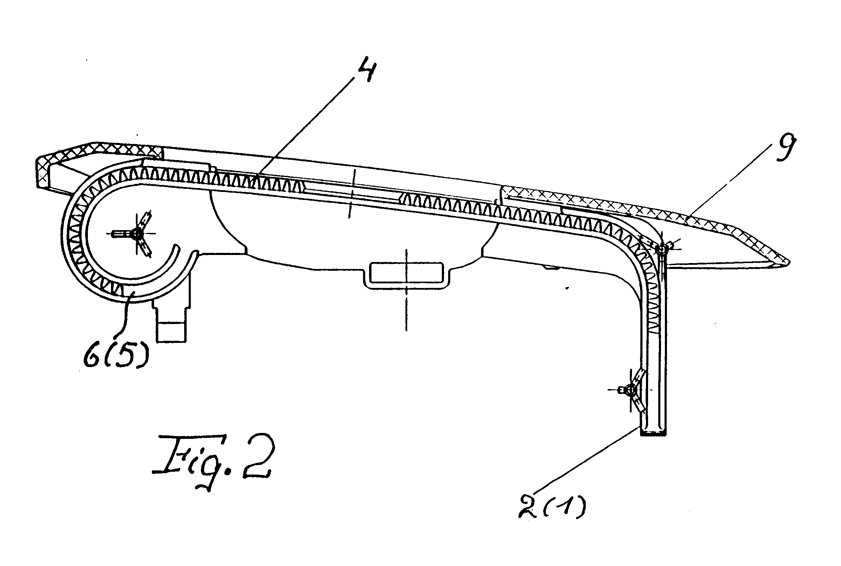

- Figur 2: einen mittleren Längsschnitt in der Bewegungsebene des Schaltstockes,

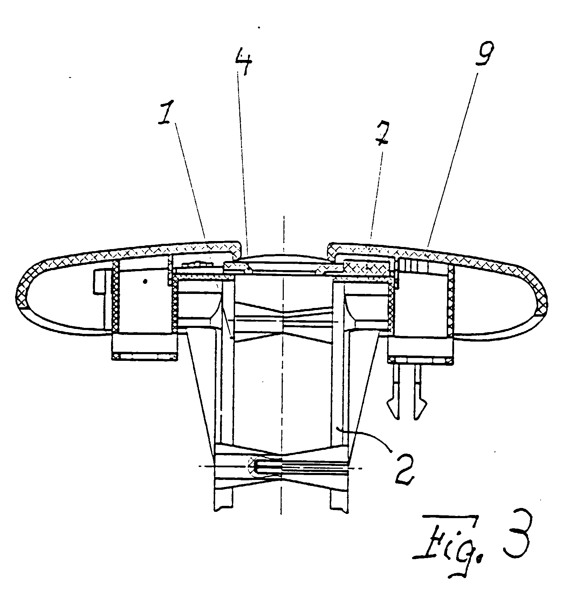

- Figur 3: einen Querschnitt der Ausbildung nach Figur 2 und
- Figur 4: eine Draufsicht, zur Hälfte auf den Gehäusedeckel und zur Hälfte auf eine Gehäuseseite.

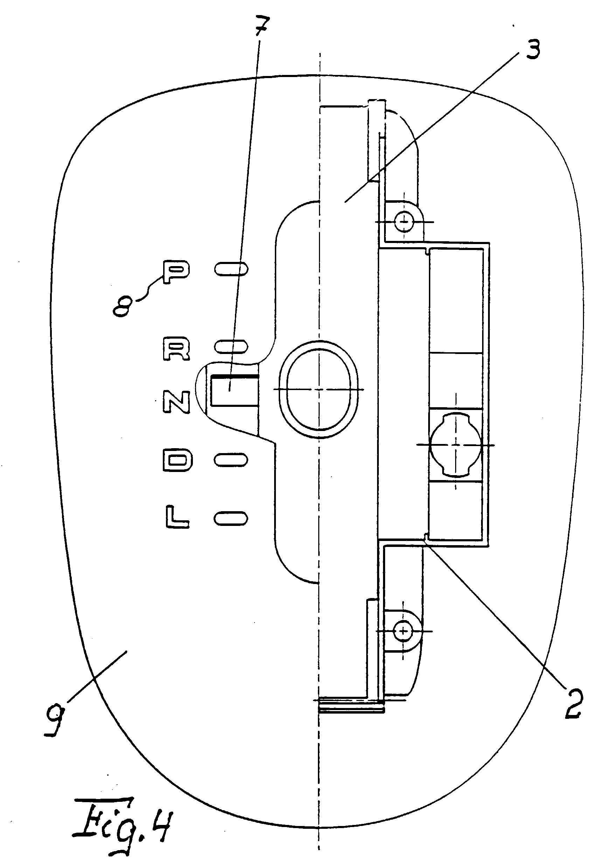

Das Gehäuse für die schwenkbare Lagerung des in der Zeichnung nicht dargestellten Schaltstockes für die Außenschaltung eines Kraftfahrzeuges mit einem automatisch wirksamen Getriebe besteht aus den beiden Gehäuseseitenteilen 1 und 2, die an der Oberseite einen meistens in Längsrichtung des Fahrzeuges verlaufenden Schlitz 3 für die Bewegung des Schaltstockes bilden. Für die Abdeckung dieses Schlitzes ist eine Jalousie 4 aus einem elastisch verformbaren Werkstoff vorgesehen, die mit ihren Seitenrändern je in eine an den Gehäuseseitenteilen 1 und 2 ausgebildete Jalousieführung 5 und 6 eingreift. Der in der Zeichnung nicht dargestellte Schaltstock durchsetzt eine Öffnung der Jalousie 4, so daß diese bei der Schaltstockbewegung mitgenommen wird. An der Jalousie 4 ist ein Anzeigeelement 7 angeordnet, welches auf Schaltstellungssymbole 8 hinweist, die sich an der Oberseite einer Gehäuseabdeckung 9 befinden. Dargestellt ist eine Ausbildungsform, bei der die Enden der aus einem elastischen Werkstoff bestehenden Jalousie 4 eine Krümmung aufweisen, die von der Form der Krümmung der Jalousieführungen 5 und 6 abweicht, so daß bei der Bewegung der Jalousie 4 in den Jalousieführungen 5 und 6 eine geringe Materialspannung in der Jalousie 4 hervorgerufen wird, durch die einerseits ein ständiger Kontakt der Jalousie 4 mit den Jalousieführungen 5 und 6 erreicht, andererseits aber die Leichtgängigkeit der Bewegung nicht nennenswert beeinträchtigt wird. Die Jalousie 4 deckt den Schlitz 3 zwischen den Gehäuseseitenteilen 1 und 2 von oben und den Schlitz 3 in der Gehäuseabdeckung 9 von unten ab. Das Anzeigeelement 7 besteht entsprechend der Darstellung in Figur 4 beispielsweise aus einem Schleppzeiger, der entsprechend der Schaltstellung des Schaltstockes auf das einer Schaltstellung zugeordnete Schaltstellungssymbol 8 zeigt. Die Anzeige der momentanen Schaltstellung kann auf mechanischem Wege mit oder ohne Lichtunterstützung erfolgen.

Das Gehäuse wird zweiteilig ausgebildet, wobei die Teilung in Längsrichtung des Schlitzes 3 verläuft. Beide Gehäuseteile werden durch Schnappelemente 10 miteinander verbunden, die an den Gehäuseseitenteilen 1 und 2 angeformt und elastisch verformbar sind. Beide Gehäuseteile werden mit diesen Schnappelementen seitlich zusammengesteckt, so daß die Jalousieführungen 5 und 6 zwischen sich die Jalousie 4 aufnehmen.

### BEZUGSZEICHENLISTE:

- 1: Gehäuseseitenteil
- 2: Gehäuseseitenteil
- 3: Schlitz
- 4: Jalousie
- 5: Jalousieführung
- 6: Jalousieführung
- 7: Anzeigeelement
- 8: Schaltstellungssymbol
- 9: Gehäuseabdeckung
- 10: Schnappelemente

## Patentansprüche

1. Schlitzabdeckung für das geschlitzte Gehäuse einer Außenschaltung eines Kraftfahrzeuges mit automatischem Getriebe, bestehend aus einer in Längsrichtung des Gehäuseschlitzes verformbaren, einteiligen Jalousie, die in einer Führung am Gehäuse synchron mit einem Schaltstock beweglich ist, und ein auf Symbole für eine Schaltstellungsanzeige gerichtetes Anzeigeelement aufweist, wobei die Jalousie (4) aus einem elastisch verformbaren Werkstoff besteht und eine einer Verformung entgegengerichtete, durch den Verlauf der Führung bestimmte Materialspannung aufweist, **dadurch gekennzeichnet, daß**
beide Enden der im mittleren Bereich etwa geraden Jalousie (4) einwärts gekrümmt ausgebildet und in einer von der spannungsfreien Nullage abweichenden Krümmung der Jalousieführung (5,6) angeordnet sind, wobei die Jalousie (4) in ein in Längsrichtung in einer Mittelebene des Schlitzes (3) geteiltes und bei der Montage durch Schnappelemente (10) aus elastischem Werkstoff zusammengefügtes Gehäuse eingesetzt ist.

## Claims

1. Slot cover for the slotted housing of an external gearshift assembly of a motor vehicle with automatic transmission, comprising a one-piece shutter, which is deformable in longitudinal direction of the housing slot and movable synchronously with a gearshift stick in a guide of the housing, and has an indicating element directed towards symbols for a gearshift position display, the shutter (4) being made of an elastically deformable material and presenting a material stress directed counter to deformation and determined by the shape of the guide,
**characterized in that**
both ends of the, in the middle region, substantially straight shutter (4) are curved inwards and disposed in a curvature, deviating from the stress-free zero position, of the shutter guide (5, 6), the shutter (4) being inserted into a housing, which is divided in longitudinal direction in a centre plane of the slot (3) and during assembly is joined together by means of snap-fit elements (10) made of resilient material.

## Revendications

1. Elément de couverture d'une fente d'un boîtier de commande d'une transmission automatique de véhicule automobile, constitué d'une jalousie en une seule pièce déformable dans la direction longitudinale de la fente du boîtier, cette jalousie étant déplaçable en synchronisme avec une tige de commande dans un système de guidage du boîtier et comprenant un élément de signalisation dirigé sur des symboles pour une signalisation de la position de commutation, élément de couverture dans lequel la jalousie (4) est constituée d'une matière élastique déformable et présente une tension opposée à une déformation, déterminée par le tracé du guidage, caractérisé en ce que les deux extrémités de la jalousie (4), sensiblement droite dans sa zone médiane, sont incurvées et disposées dans une courbure du système de guidage (5, 6) de la jalousie s'écartant de la position zéro exempte de tension, en ce que la jalousie (4) est disposée dans un boîtier compartimenté en direction longitudinale dans un plan médian de la fente (3) et lors du montage, assemblé par des éléments encliquetables (10) en une matière plastique élastique.
